# EUROPEAN PATENT APPLICATION

(11) **EP 3 385 158 A1**
(43) Date of publication of application: **10.10.2018**
(21) Application number: 18165681.0
(22) Date of filing: 04.04.2018
(51) Int. Cl.: B63B 35/44

(54) **HABITABLE FLOATING STRUCTURE PARTICULARLY FOR THEMPORARY STAYS**

(30) Priority: 04.04.2017 IT 201700036665 U
(71) Applicant: Angeli, Omar, 47822 Santarcangelo di Romagna (RN) (IT)
(72) Inventor: Angeli, Omar, 47822 Santarcangelo di Romagna (RN) (IT)
(74) Representative: Modiano, Micaela Nadia

(57) **Abstract**

A habitable floating structure (1) particularly for temporary stays, comprising at least one barge (2) and at least one habitation element (3) preferably chosen from a mobile home, a tent, a prefabricated building and the like. The barge (2) is type-approved as a CE certified craft and is provided with means for fixing to an element preferably chosen from a jetty (A), a mooring buoy, a buoy, an anchor and the like. The habitation element (3) is arranged and conveniently coupled to the top of the barge (2).

## Description

The present invention relates to a habitable floating structure particularly for temporary stays.

It is known that in recent years, due to the economic crisis, the nautical sector has undergone a considerable decline.

In particular, a great reduction in demand for berths (both annual and temporary) of ports, docks, marinas and the like has been observed.

For these reasons, the search for innovative and enticing solutions that allow to cope with the severe crisis that this sector has been experiencing in recent years is becoming increasingly intense.

The aim of the present invention is to solve the problems described above, by proposing a habitable floating structure particularly for temporary stays that can offer a different and original proposal for tourist stays.

Within this aim, an object of the invention is to propose a habitable floating structure particularly for temporary stays that allows to utilize and manage unused berths.

Another object of the invention is to propose a habitable floating structure particularly for temporary stays that allows to utilize bodies of water of rivers, lakes and the like that currently are not yet used.

A further object of the present invention is to provide a habitable floating structure particularly for temporary stays that does not require building permits or concessions in order to be adopted.

Another object of the invention is to propose a habitable floating structure particularly for temporary stays that is stable and equipped with the same conveniences as a home.

A further object of the present invention is to provide a habitable floating structure particularly for temporary stays that has modest costs, is relatively simple to provide in practice and is safe in application.

This aim, as well as these and other objects which will become better apparent hereinafter are achieved by a habitable floating structure particularly for temporary stays, characterized in that it comprises at least one barge and at least one habitation element preferably chosen from a mobile home, a tent, a prefabricated building and the like, said barge being type-approved as a CE certified craft and being provided with means for fixing to an element preferably chosen from a jetty, a mooring buoy, a buoy, an anchor and the like, said habitation element being arranged and conveniently coupled to the top of said barge.

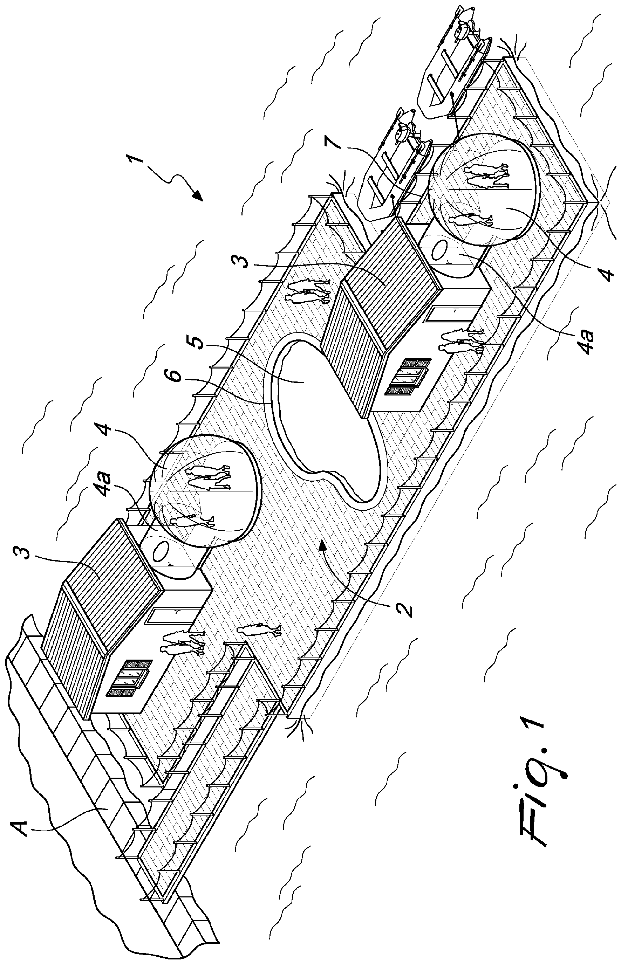

Further characteristics and advantages of the invention will become better apparent from the description of a preferred but not exclusive embodiment of the habitable floating structure particularly for temporary stays, according to the invention, illustrated by way of non-limiting example in the accompanying drawings, wherein Figure 1 shows the floating structure, according to the invention, in a perspective view.

With particular reference to the figure, the reference numeral 1 generally designates a habitable floating structure particularly for temporary stays.

According to the invention, the floating structure 1 comprises at least one barge 2 and at least one habitation element 3 preferably chosen from a mobile home, a tent, a prefabricated building and the like.

Said barge 2 is type-approved as a CE certified craft.

In Italian law, recreational watercraft with oars and those in which the hull, measured according to the EN/ISO/DIS 8666 harmonized standards, has a length of 10 m or less, regardless of their propulsion, are termed craft.

It is specified furthermore that craft are excluded from the requirement of registration in registries of recreational watercraft maintained by harbor master's offices, by marine district offices and by motor vehicle offices and therefore are unregistered movable property.

Recreational watercraft can be used for rental or hiring for recreational purposes or for tourist use of a local nature, and for support of underwater diving for sports or recreational purposes.

The barge 2, according to the invention, is provided with means for fixing to an element preferably chosen from a jetty A, a mooring buoy, a buoy, an anchor and the like.

In particular, the habitation element 3 is arranged and appropriately coupled to the top of the barge 2.

The habitation element 3 can be arranged easily on the barge 2 by means of cranes, normally used to load goods on ships or to place ships in the water, and its utilities can be connected to the mains for supplying potable water and electric power provided at the berth.

Said structure 1 is therefore compliant with the provisions of directive 2013/53/EU that regulates recreational craft certification.

In fact, contrary to traditional houseboats, the floating structure 1, according to the invention, does not necessarily need to have a hydrodynamic hull, an engine and the equipment that is typical of recreational watercraft.

Said floating structure 1 does not need to have particular hydrodynamic characteristics and can therefore be considered for all purposes as a mainly fixed houseboat, which however has the same conveniences as homes.

In fact, said structure 1 ensures a degree of stability that is comparable with buildings that subject to building permits/standards.

The floating structure 1 can be used in the presence of calm water, such as for example marine docks, lakes, rivers or navigable canals.

Said structure 1 therefore offers the possibility to stay in a floating habitable space, with the same conveniences offered by a normal home, but at assuredly lower costs and in particularly exclusive and private locations.

The structure 1, according to the invention, therefore allows to convert the unused berth into a space that the operators of ports, marinas, docks and the like can utilize economically, renting it for example as a holiday home or as an office.

The possibility is not excluded, in any case, that the structure 1 might be used by owners and operators of camping sites located on the shores of lakes, rivers, canals and the like, in order to increase the space available, utilizing part of the body of water adjacent to the camping site, which is currently not yet used.

The utilities of the habitation element 3 can in fact be connected easily to the potable water and electric power supply mains provided at camping sites.

According to a particularly effective and efficient solution, illustrated in the accompanying figure, the structure 1 can comprise an inflatable chamber 4, made of polymeric material, provided with means for sealed anchoring to at least one respective portion of the habitation element 3 and of the barge 2.

More particularly, at least one ventilation assembly (not visible in the figure but in any case of a known type) is coupled to the chamber 4 for the corresponding inflation and retention in the maximum volume configuration.

Said ventilation assembly mainly performs four functions:
1) keeping the chamber 4 correctly inflated;
2) replacing the air inside the chamber 4 and purify it from dust, pollens and allergens;
3) avoiding accumulations of humidity during use (which might trigger the forming of condensation and the like);
4) providing climate control, depending on the environmental conditions, for the environment inside the chamber 4.

The ventilation assembly is chosen preferably among silent ones and is accommodated inside soundproofed containers to be arranged inside the habitation element 3 or proximate thereto.

The inflatable chamber 4 therefore is a solution that is effective and economical, as well as simple and quick to install, allowing to utilize these self-supporting inflatable structures to extend the spaces usable on the barge 2.

The inflatable chamber 4 can be made of transparent and/or opaque polymeric material, depending on the specific requirements of application.

Furthermore, it is convenient to point out that the inflatable chamber 4 also constitutes a valid barrier against insects, which in areas adjacent to water and in some periods of the year can be particularly annoying.

It is specified that the mentioned inflatable chambers 4 generally do not provide for the presence of frames made of metal or of another kind; the possibility is not excluded, in any case, to install small structural frames at the tunnel 4a for interconnection between the "habitable" region of the inflatable structure and the installation wall of the habitation element 3.

The result is the possibility to live in a large healthy space in contact with nature, utilizing the principles of minimal energy consumption, minimal use of material, maximum comfort and maximum interaction with the environment.

The inflatable chamber 4 in fact allows to create a single completely sealed and climate-controlled environment which is connected or adjacent to the habitation element 3 (which can be partly or fully transparent) and is extremely resistant also to atmospheric agents.

The possibility is in fact not excluded that the inflatable chamber 4 is not connected directly to the habitation element 3 but is a separate body.

According to a particularly useful and practical solution, shown in the accompanying figure, the barge 2 can comprise a tub 5 that can be used as a swimming pool, a whirlpool bath, and the like.

The tub 5 can be made of material preferably chosen among fiber-reinforced plastic, polymers, stainless steel and the like.

The tub 5, furthermore, can be accommodated within a through opening 6 that is formed in the barge 2 and communicates with the body of water on which the barge floats.

The possibility is not excluded, in any case, that the tub 5 might be placed directly in the water and coupled firmly to the barge 2.

The tub 5 can contain purified, filtered and sterilized water or, in the case of pristine locations, fresh water from a lake or river, or sea saltwater.

The possibility is not excluded that the barge 2 might comprise mooring places 7 for a boat, an inflatable boat, a jet ski, a motorboat, a canoe and the like.

It is appropriate to specify that the structure 1 can comprise a manifold (not visible in the figure, but in any case of a known type) for supplying the electrical utilities of the habitation element 3 connected to a power source preferably chosen among the electrical grid, a dedicated generator, and the like.

More particularly, the structure 1 can comprise a system for the quick fixing of the habitation element 3 to the barge 2.

Furthermore, it is useful to specify that the barge 2 can be constituted by a plurality of floating modules which are mutually coupled.

The present invention is therefore intended both for owners and operators of ports, marinas, docks and the like, always seeking innovative ideas for coping with the crisis in the nautical sector and for utilizing unused berths, and for owners and operators of camping sites located on the shores of lakes, rivers, canals, and the like, who can increase both profits and available space by utilizing part of the body of water adjacent to the camping site, which currently is not yet used.

The floating structure according to the invention thus allows tour operators to offer a different and original proposal for a tourist stay.

Furthermore, by virtue of the presence of the mooring place 7, it is possible to make available to the customer who rents the structure 1 also a small boat, such as for example an inflatable boat, a jet ski, a motorboat, a canoe, and the like.

The possibility is not excluded, in any case, that the habitation element might be used also as an office as well as a home.

Advantageously, the habitable floating structure 1 particularly for temporary stays allows to offer a different and original proposal for a tourist stay.

Conveniently, the floating structure 1, according to the invention, allows to utilize and manage unused berths, associating innovation, design, simplicity and well-being.

Effectively, the habitable floating structure 1 particularly for temporary stays allows to utilize bodies of water of rivers, lakes and the like that currently are not yet used.

Validly, the habitable floating structure 1 particularly for temporary stays does not require particular permits or concessions to be adopted.

Conveniently, the floating structure 1, according to the invention, is stable and provided with the same conveniences as a home.

The invention can thus constitute a new standard in the nautical/tourist sector, offering the possibility to experience in a unique and exclusive way locations such as the sea, lakes or rivers.

By adopting the structure 1, one in fact obtains a floating habitable space with all the conveniences offered by an ordinary home, but at assuredly lower costs and in particularly exclusive and private locations.

The invention thus conceived is susceptible of numerous modifications and variations, all of which are within the scope of the appended claims; all the details may further be replaced with other technically equivalent elements.

In the exemplary embodiments shown, individual characteristics, given in relation to specific examples, may actually be interchanged with other different characteristics that exist in other exemplary embodiments.

In practice, the materials used, as well as the contingent shapes and dimensions, may be any according to the requirements and the state of the art.

The disclosures in Italian Utility Model Application no. 202017000036665, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A habitable floating structure particularly for temporary stays, **characterized in that** it comprises at least one barge (2) and at least one habitation element (3) preferably chosen from a mobile home, a tent, a prefabricated building and the like, said barge (2) being type-approved as a CE certified craft and being provided with means for fixing to an element preferably chosen from a jetty (A), a mooring buoy, a buoy, an anchor and the like, said habitation element (3) being arranged and conveniently coupled to the top of said barge (2).

2. The floating structure according to claim 1, **characterized in that** it comprises an inflatable chamber (4), made of polymeric material, provided with means for sealed anchoring to at least one respective portion of said habitation element and of said barge (2), at least one ventilation assembly being coupled to said chamber (4) for its inflation and retention in the maximum volume configuration.

3. The floating structure according to claim 1, **characterized in that** said barge (2) comprises a tub (5) that can be used as a swimming pool, a whirlpool bath, and the like.

4. The floating structure according to claim 3, **characterized in that** said tub (5) is made of a material preferably chosen among fiber-reinforced plastic, polymers, stainless steel and the like.

5. The floating structure according to claim 3, **characterized in that** said tub (5) is accommodated inside a through opening (6) that is formed in said barge (2) and communicates with the body of water on which said barge floats.

6. The floating structure according to claim 1, **characterized in that** said barge (2) comprises mooring places (7) for a boat, an inflatable boat, a jet ski, a motorboat, a canoe and the like.

7. The floating structure according to claim 5, **characterized in that** it comprises a manifold for the supply of the electrical utilities of said habitation element (3) connected to a power source chosen preferably from the electrical grid, a dedicated generator, and the like.

8. The floating structure according to claim 1, **characterized in that** it comprises a system for the quick fixing of said habitation element (3) to said barge (2).

9. The floating structure according to claim 1, **characterized in that** said barge (2) is constituted by a plurality of mutually coupled floating modules.
